# EUROPEAN PATENT SPECIFICATION

(11) **EP 3 332 085 B1**
(45) Date of publication and mention of the grant of the patent: **17.02.2021**
(21) Application number: 16748288.4
(22) Date of filing: 29.07.2016
(51) Int. Cl.: E21B 33/038, H01R 13/523, E21B 17/00, E21B 43/013

(54) **SUBSEA FLYING LEAD**
UNTERWASSERFLUGLEITUNG
CÂBLE VOLANT SOUS-MARIN

(30) Priority: 06.08.2015 GB 201513920
(43) Date of publication of application: 13.06.2018
(73) Proprietor: GE Oil & Gas UK Limited, Nailsea Bristol BS48 1BS (GB)
(72) Inventor: AUGUST, Charles Anthony, Nailsea Bristol BS48 1BS (GB); DALZIEL, Robert, Nailsea Bristol BS48 1BS (GB)
(74) Representative: BRP Renaud & Partner mbB Rechtsanwälte Patentanwälte Steuerberater
(86) International application number: PCT/EP2016/068212
(87) International publication number: WO 2017/021325

(56) References cited:
- WO-A1-2009/153551
- GB-A- 2 442 104
- US-A1- 2012 168 168
- US-A1- 2013 175 958
- US-A1- 2014 144 649

## Description

This invention relates to a subsea flying lead, and an apparatus and method for transmitting electricity along the tubing of a fluid line (e.g. a hydraulic line or chemical line) in a subsea flying lead. In one aspect, it relates to an apparatus and method for transmitting electricity between components of an underwater hydrocarbon extraction facility. Such electricity could be used for the purpose of providing power, communication, or both power and communication.

### Background

US 2012/168168 A1 discloses formation of subsea connections.

Subsea flying leads, for example flying leads included in jumper bundles or mini-umbilicals, are specialised pieces of equipment used in the subsea oil and gas industry which are highly complex. Such flying leads often contain a number of fluid lines and electrical lines, each fluid / electrical line adding to the cost, weight and complexity of the bundle.

It is an aim of the present invention to reduce the number of electrical lines between components of an underwater hydrocarbon extraction facility. This aim is achieved by using the tubing of fluid lines (e.g. hydraulic lines or chemical lines) which cannot easily be removed from the facility as electrical conductors. The use of a hydraulic line or chemical line tubing running between two components to transmit electricity removes the need to also have an electrical line connecting the components. This can reduce the size, weight and / or complexity of a subsea flying lead connecting the components, and so reduce the cost of such a bundle.

As prior art there may be mentioned US5209673 and US5295848, which each disclose combined hydraulic and electric subsea couplings. As further prior art there may be mentioned US5125847, US4346256A and US8857522 which disclose electrically conducting sleeves for fluid conduits. As non-patent literature prior art there may be mentioned a paper titled "Metal Tube Umbilicals - Deepwater and Dynamic Considerations" from the 1995 Offshore Technology Conference (document ID: OTC-7713-MS) and a paper titled "Mensa Project: Hydraulic Umbilicals" from the 1998 Offshore Technology Conference (document ID: OTC-8629-MS), each of which discusses the use of metal tubing for subsea hydraulic umbilicals.

### Summary of the invention

In one aspect of the present disclosure is provided a subsea flying lead as specified in claim 1 and a method of transmitting an electric current as specified in claim 8.

In accordance with a first aspect of the present invention there is provided a subsea flying lead containing a fluid line comprising a tubing, wherein, in use, an electric current is transmitted along the tubing.

The subsea flying lead could further comprising a flying plate, wherein the fluid line terminates in a fluid coupler on the flying plate.

In accordance with a second aspect of the present invention there is provided an electricity transmission apparatus comprising a subsea structure and a subsea flying lead as described above, wherein the subsea structure comprises a fluid line and a fixed plate, said fluid line terminating in a fluid coupler on the fixed plate, wherein, in use, the fixed plate fluid coupler is coupled to said flying plate fluid coupler.

The subsea flying lead could comprises an electrical connector in its flying plate, and an electrical conductor could run from the tubing of fluid line to the electrical connector. The subsea structure could comprises an electrical connector on its fixed plate, and, in use, the fixed plate electrical connector could be connected to said flying plate electrical connector. The fluid line of the subsea flying lead could comprise a non-conducting section between the flying plate fluid coupler and the point at which the electrical conductor is connected to the tubing of the fluid line.

The fluid line of the subsea structure could comprise a non-conducting section. The subsea structure comprises an electrical conductor connected to the fluid line of the subsea structure at a point between the non-conducting section and the fluid coupler of the fixed plate.

The electrical conductor could be connected to an electrically powered component of the subsea structure.

The fluid line of the subsea flying lead could be, for example, a hydraulic line or a chemical line.

In accordance with a third aspect of the present invention there is provided method of transmitting an electric current to a component of an underwater hydrocarbon extraction facility, the method comprising the steps of:
providing a subsea flying lead containing at least one fluid line comprising a tubing, said tubing terminating in a fluid coupler in a flying plate;
providing a subsea structure containing at least one fluid line comprising a tubing, said tubing terminating in a fluid coupler in a fixed plate;
connecting flying plate to the fixed plate, such that the flying plate fluid coupler is coupled to the fixed plate fluid coupler;
transmitting an electric current along the tubing; and
transmitting, via an electrical conductor, the electric current from the tubing of one of the fluid lines to the component.

The electrical conductor could be connected to the fluid line of the subsea flying lead. The subsea flying lead could comprise an electrical connector in its flying plate, and the electrical conductor could run from the tubing of fluid line to the electrical connector. The subsea structure could comprise an electrical connector on its fixed plate, and, in use, the fixed plate electrical connector could be connected to said flying plate electrical connector. The fluid line of the subsea flying lead could comprise a non-conducting section between the flying plate fluid coupler and the point at which the electrical conductor is connected to the tubing of the fluid line.

The fluid line of the subsea structure could comprise a non-conducting section. The electrical conductor could be connected to the fluid line of the subsea structure at a point between the non-conducting section and the fluid coupler of the fixed plate.

The electrical conductor could be connected to an electrically powered component of the subsea structure.

The fluid line of the subsea flying lead could be, for example, a hydraulic line or a chemical line.

### Detailed description

The invention will now be described with reference to the accompanying drawings, in which:
Fig. 1 schematically shows an apparatus in accordance with a first embodiment of the invention;
Fig. 2 schematically shows an apparatus in accordance with a second embodiment of the invention;
Fig. 3a schematically shows a connection suitable for use with the present invention, where fluid in the fluid line is non-conducting; and
Fig. 3b schematically shows a connection suitable for use with the present invention, where fluid in the fluid line is conducting

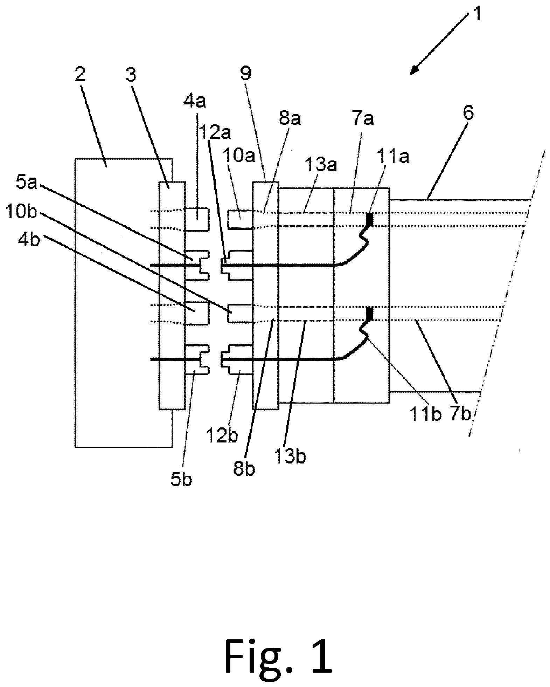

Fig. 1 schematically shows an electricity transmission apparatus 1 in accordance with a first embodiment the present invention. The apparatus depicted shows how the present invention can be retrofitted on already-deployed (so-called 'brownfield') subsea structures.

A subsea structure 2, for example a component of an underwater hydrocarbon extraction facility, comprises a fixed plate 3. The fixed plate 3 includes fluid couplers 4a, 4b and electrical connectors 5a, 5b. Each of the fluid couplers 4a, 4b and electrical connectors 5a, 5b are female couplers and connectors which are arranged to accept male couplers and connectors from a flying lead 6.

The flying lead 6 is a 'fluid-only' flying lead, i.e. it contains only hydraulic lines and / or chemical lines (hereafter referred to as 'fluid lines'), and no dedicated electrical lines. The fluid lines each comprise a section of metal tubing 7a, 7b connected to a metal adaptor 8a, 8b in a flying plate 9, which is in turn connected to a male fluid coupler 10a, 10b. Each of the male fluid couplers 10a, 10b is arranged to mate with a respective one of the female fluid couplers 4a, 4b on the fixed plate 3 of the subsea structure 2.

An electrical conductor 11a, 11b is attached to each of the sections of metal tubing 7a, 7b and is connected to a respective male electrical connector 12a, 12b on the flying plate 9. Each male electrical connector 12a, 12b is arranged to mate with a respective one of the female electrical connectors 5a, 5b on the fixed plate 3 of the subsea structure 2.

A non-conducting piece 13a, 13b is inserted into each fluid line between the metal tubing sections 7a, 7b and the male fluid couplers 10a, 10b. This is to prevent the electrification of the flying plate 9, and in turn the fixed plate 3 and the subsea structure 2.

In use, electricity is transmitted along the metal tubing sections 7a, 7b of the fluid lines in the flying lead 6, and so transmitted to the electrical conductors 1 1a, 11b. As the electrical conductors 11a, 11b are connected to respective ones of the electrical connectors 12a, 12b, electricity is transmitted to the female electrical connectors 5a, 5b and from there to a component of the underwater hydrocarbon extraction facility that requires electrical power and / or communication (for example, an electric actuator in a Christmas tree). The non-conducting pieces 13a, 13b, ensure that electricity is transmitted only to the electrical connectors 12a, 12b, and so the subsea structure 2 is not electrified generally.

The electricity supplied could be used for the purpose of providing power, communication, or both power and communication. For example, if only power is required by component of the underwater hydrocarbon extraction facility, high voltage direct current (HVDC) or alternating current (AC) may be transmitted down the metal tubing sections 7a, 7b. If a communication signal is required by component of the underwater hydrocarbon extraction facility, an analogue or digital electrical communication signal could be transmitted down the metal tubing sections 7a, 7b. If both power and communication are required by component of the underwater hydrocarbon extraction facility, a so-called communication on power signal (COPS) could be transmitted down the metal tubing sections 7a, 7b, where a power waveform and a communication waveform are combined.

Although a flying lead 6 is shown in Fig. 1, the invention is not so restricted, and is also compatible with an umbilical bundle as component 6. Additionally, while a 'fluid-only' flying lead is shown in Fig. 1, the invention may also be applied to flying leads which do contain some electrical lines. The use of the tubing as an electrical conductor to eliminate one or more electrical line still results in a reduction in the complexity and cost of a flying lead, even where some electrical lines remain in the flying lead.

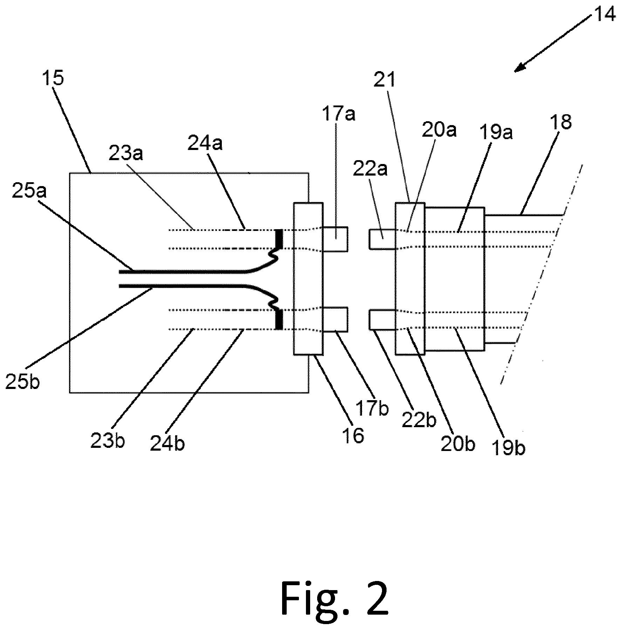

Fig. 2 schematically shows an electricity transmission apparatus 14 in accordance with a second embodiment of the invention. The apparatus depicted shows how the present invention can be applied to newly-deployed (so-called 'greenfield') subsea structures.

A subsea structure 15, for example a component of an underwater hydrocarbon extraction facility, comprises a fixed plate 16. The fixed plate 16 includes fluid couplers 17a, 17b. Each of the fluid couplers 17a, 17b are female couplers which are arranged to accept male couplers from a flying lead 18.

The flying lead 18 is a 'fluid-only' flying lead, i.e. it contains only hydraulic lines and / or chemical lines (hereafter referred to as 'fluid lines'), and no dedicated electrical lines. The fluid lines each comprise a section of metal tubing 19a, 19b connected to a metal adaptor 20a, 20b in a flying plate 21, which is in turn connected to a male fluid coupler 22a, 22b. Each of the male fluid couplers 22a, 22b is arranged to mate with a respective one of the female fluid couplers 17a, 17b on the fixed plate 16 of the subsea structure 15.

The subsea structure also contains fluid lines connected to the female fluid couplers 17a, 17b. The fluid lines each comprise a section of metal tubing 23a, 23b connected to a respective one of the female fluid couplers 17a, 17b via non-conducting pieces 24a, 24b. Electrical conductors 25a, 25b are connected to the fluid lines between the non-conducting pieces 24a, 24b and the female fluid couplers 17a, 17b.

In use, electricity is transmitted along the metal tubing sections 19a. 19b of the fluid lines in the flying lead 18, and so transmitted to the metal adaptors 20a, 20b and the male fluid couplers 22a, 22b. As the male fluid couplers 22a, 22b are connected to respective ones of the female fluid couplers 17a, 17b, electricity is transmitted to the female fluid couplers 17a, 17b and from there to the electrical conductors 25a, 25b. The non-conducting pieces 24a, 24b, ensure that electricity is transmitted only to the electrical conductors 25a, 25b, and the subsea structure 15 is not electrified generally. The electrical conductors 25a, 25b transmit the received electricity to components of the underwater fluid extraction facility that require electrical power and / or communication (for example, an electric actuator in a Christmas tree).

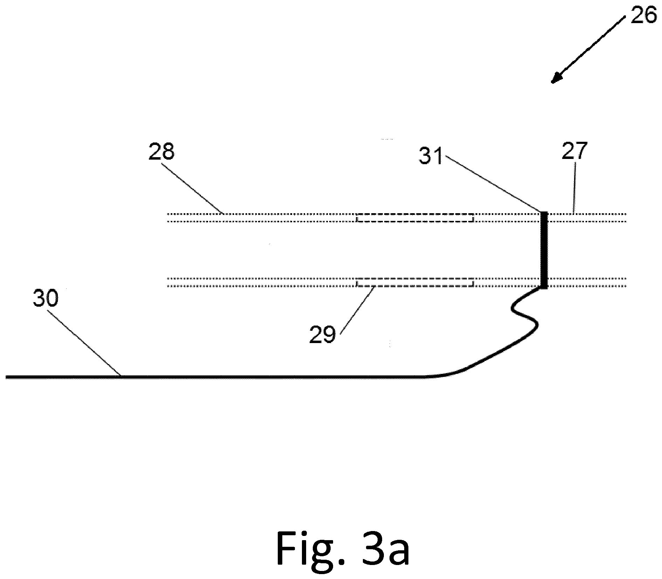

Fig. 3a shows an enlarged view of a connection between an electrical conductor and a section of metal tubing in a fluid line 26 suitable for use in the present invention. Fig. 3a shows an example of a suitable arrangement where the fluid in the fluid line 26 is a non-conducting fluid. An example of a non-conducting fluid is mono-ethylene glycol (MEG), which is a common fluid injected into wells to stop hydrate formation and which has a very low conductivity.

The fluid line 26 comprises a first metal tubing section 27 and a second metal tubing section 28. The first metal tubing section 27 is connected to the second metal tubing section 28 via a non-conducting piece 29. An electrical conductor 30 is connected to the first metal tubing section 25.

In use, electricity is received by the first metal tubing section 27 (for example, from a fluid line in a flying lead as shown in Fig. 2). The received electricity is conducted from the first metal tubing section 27 by the electrical conductor 30, which transmits it to components within the facility in which the fluid line is located. As the fluid within the tubing is non-conducting, the non-conducting piece 29 electrically isolates the second metal tubing section 28 from the received electricity, as well as any components in contact with the second metal tubing section 28 downstream.

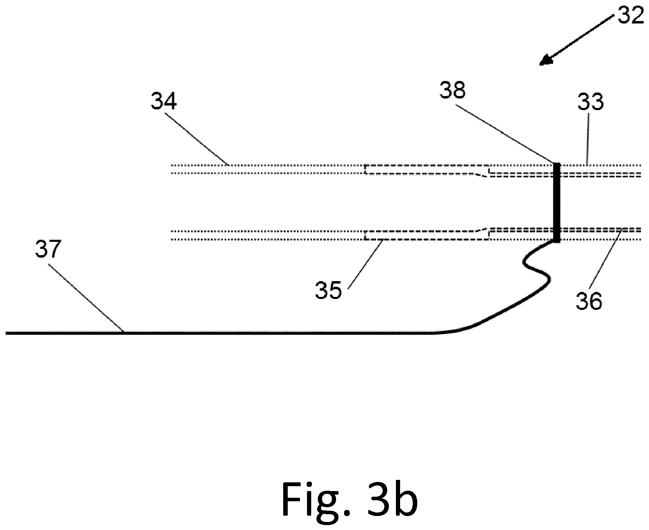

Fig. 3b shows an enlarged view of an exemplary connection between an electrical conductor and a section of metal tubing in a fluid line 32 suitable for use in the present invention. Fig. 3b shows an example of a suitable arrangement where the fluid in the fluid line 32 is a conducting fluid. Often, hydraulic fluids used in underwater hydrocarbon extraction facilities are water-based, and so are slightly conducting. Therefore, the connection shown in Fig. 3b is particularly suitable when the fluid line 32 is a hydraulic line.

The fluid line 32 comprises a first metal tubing section 33 and a second metal tubing section 34. The first metal tubing section 33 is connected to the second metal tubing section 34 via a non-conducting piece 35. An electrical conductor 37 is connected to the first metal tubing section 33 via a conducting band 38.

In use, electricity is received by the first metal tubing section 33 (for example, from a fluid line in a flying lead as shown in Fig. 2). The received electricity is conducted from the first metal tubing section 33 by the electrical conductor 37, which transmits it to components within the facility in which the fluid line is located. As the fluid within the tubing is conducting, the non-conducting piece 35must ensure that the fluid within the tube does not come into contact with both the first metal tubing section 33 and the electrical conductor 37. To achieve this, the non-conducting piece 35 has an extended portion 36 which extends along the inner wall of the first metal tubing section 33 for its entire length. This electrically isolates the fluid within the fluid line and, hence, the second metal tubing section 34 from the received electricity, as well as any components in contact with the second metal tubing section 34 or in contact with the fluid within the fluid line.

The non-conducting piece 35, 36 could be a single unitary piece, or alternatively it could be a combination of a non-conducting piece as shown in Fig. 3a (i.e. a tubing section) in conjunction with an extended section formed of a non-conducting lining applied to the first metal tubing section 33. Such a lining could be applied, for example, by spraying a non-conducting resin onto the inner wall of the first metal tubing section 33, which is then cured and hardened to become fluid-tight. In alternative embodiments, a fluorinated polymer could be used to coat the inner wall of the first tubing section, or a ceramic coating could be used.

The invention is defined in the wording of the appended claims and the embodiments and example present in this disclosure are not part of the current invention.

In another aspect of the present disclosure, while male fluid couplers and electrical connectors have been shown on the flying plate and female fluid couplers and electrical connectors have been shown on the fixed plate, these could easily be reversed. It is immaterial which plate has a male coupler / connector and which has a female coupler / connector, provided they correspond to one another.

While the above embodiments have been described with reference to a flying lead that runs between two subsea components, the same principle could be used on an umbilical cable running between the surface and the seabed. The principle could also be used in a section of a flying lead or umbilical (as opposed to the entire flying lead / umbilical) to eliminate the need for an electrical line in that section.

Where flying leads or umbilicals comprise an armour layer around a fluid line, said armour layer could be used to transmit electricity instead of the tubing itself. In this respect, it is noted that umbilicals often have an armour layer made from metal that surrounds all the tubes within the umbilical and which is itself coated. This armour layer could be used for electricity transmission instead of the fluid line tubing.

## Claims

1. A subsea flying lead (6) for transmitting an electric current to a component of a subsea structure, the subsea flying lead (6) comprising:
a fluid line comprising a tubing (7a,7b), **characterised in that**, in use, an electric current is transmitted along the tubing (7a,7b);
a flying plate (9), wherein the fluid line terminates in a fluid coupler (10a, 10b) on the flying plate (9); and
an electrical connector (!2a,12b) in the flying plate (9), and wherein an electrical conductor (11a, 11b) runs from the tubing (7a,7b) of fluid line to the electrical connector (12a,12b);
wherein the flying plate (9) is arranged to be connected to a fixed plate (3) on a subsea structure (2) containing at least one fluid line comprising a tubing terminating in a fluid coupler (4a, 4b) in the fixed plate (3) such that, in use, the flying plate fluid coupler (10a, 10b) is coupled to the fixed plate fluid coupler (4a, 4b); and
electric current transmitted along the tubing (7a, 7b) of the fluid line is, in use, transmitted via the electrical conductor (11a, 11b) to a component of the subsea structure (2).

2. A subsea flying lead (6) according to claim 1, wherein the fluid line comprises a non-conducting section (13a,13b) between the flying plate fluid coupler (10a, 10b) and the point at which the electrical conductor (11a, 11b) is connected to the tubing (7a, 7b) of the fluid line.

3. An electricity transmission apparatus comprising a subsea structure (2) and a subsea flying lead (6) according to claim 1 or claim 2, wherein the subsea structure (2) comprises a fluid line and a fixed plate (3), said fluid line terminating in a fluid coupler (4a,4b) on the fixed plate (3), wherein, in use, the fixed plate fluid coupler (4a, 4b) is coupled to said flying plate fluid coupler (10a, 10b).

4. An electricity transmission apparatus according to claim 3, wherein the subsea structure (2) comprises an electrical connector (5a,5b) on its fixed plate (3) and, in use, the fixed plate electrical connector (5a,5b) is connected to said flying plate electrical connector (12a,12b).

5. An electricity transmission apparatus according to claim 3, wherein the fluid line (26,32) of the subsea structure (2) comprises a non-conducting section (29,35).

6. A subsea flying lead (6) according to claim 1 or 2, or an electricity transmission apparatus according to any of claims 3 to 5, wherein the fluid line of the subsea flying lead (6) is a hydraulic line.

7. A subsea flying lead (6) according to claim 1 or 2, or an electricity transmission apparatus according to any of claims 3 to 5, wherein the fluid line of the subsea flying lead (6) is a chemical line.

8. A method of transmitting an electric current to a component of an underwater hydrocarbon extraction facility, the method comprising the steps of:
providing a subsea flying lead (6) containing at least one fluid line comprising a tubing (7a,7b), said tubing terminating in a fluid coupler (10a, 10b) in a flying plate (9);
providing a subsea structure (2) containing at least one fluid line comprising a tubing, said tubing terminating in a fluid coupler (4a,4b) in a fixed plate (3);
connecting the flying plate (9) to the fixed plate (3), such that the flying plate fluid coupler (10a, 10b) is coupled to the fixed plate fluid coupler (4a,4b);
**characterized by** transmitting an electric current along the tubing (7a,7b); and
transmitting, via an electrical conductor (11a, 11b), the electric current from the tubing (7a,7b) of one of the fluid lines to the component.

9. A method according to claim 8, wherein the electrical conductor (11a, 11b) is connected to the fluid line of the subsea flying lead (6).

10. A method according to claim 9, wherein the subsea flying lead (6) comprises an electrical connector (12a,12b) in its flying plate (9), and wherein the electrical conductor (11a, 11b) runs from the tubing (7a,7b) of fluid line to the electrical connector (12a,12b).

11. A method according to claim 10, wherein the subsea structure (2) comprises an electrical connector (5a,5b) on its fixed plate (3) and, in use, the fixed plate electrical connector (5a,5b) is connected to said flying plate electrical connector (12a, 12b).

12. A method according to claim 8, wherein the fluid line (26,32) of the subsea structure (2) comprises a non-conducting section (26,32).

13. A method according to claim 12, wherein the electrical conductor is connected to the fluid line of the subsea structure (2) at a point between the non-conducting section (29,35) and the fluid coupler of the fixed plate (3).

14. A method according to claim 13, wherein the electrical conductor is connected to an electrically powered component of the subsea structure (2).

## Patentansprüche

1. Unterwasserflugleitung (6) zum Übertragen eines elektrischen Stroms an eine Komponente einer Unterwasserstruktur, wobei die Unterwasserflugleitung (6) Folgendes umfasst:
eine Fluidleitung, umfassend einen Schlauch (7a, 7b), **dadurch gekennzeichnet, dass** im Gebrauch ein elektrischer Strom entlang des Schlauchs (7a, 7b) übertragen wird;
eine Flugplatte (9), wobei die Fluidleitung in einem Fluidkoppler (10a, 10b) an der Flugplatte (9) endet; und
einen elektrischen Verbinder (12a, 12b) in der Flugplatte (9), und wobei ein elektrischer Leiter (11a, 11b) von dem Schlauch (7a, 7b) der Fluidleitung zu dem elektrischen Verbinder (12a, 12b) verläuft;
wobei die Flugplatte (9) angeordnet ist, um mit einer festen Platte (3) an einer Unterwasserstruktur (2) verbunden zu werden, die mindestens eine Fluidleitung enthält, die einen Schlauch umfasst, der in einem Fluidkoppler (4a, 4b) in der festen Platte (3) endet, so dass der Flugplattenfluidkoppler (10a, 10b) im Gebrauch mit dem Fluidkoppler (4a, 4b) der festen Platte gekoppelt ist; und
elektrischer Strom, der entlang des Schlauchs (7a, 7b) der Fluidleitung übertragen wird, im Gebrauch über den elektrischen Leiter (11a, 11b) an eine Komponente der Unterwasserstruktur (2) übertragen wird.

2. Unterwasserflugleitung (6) nach Anspruch 1, wobei die Fluidleitung einen nichtleitenden Abschnitt (13a, 13b) zwischen dem Flugplattenfluidkoppler (10a, 10b) und dem Punkt umfasst, an dem der elektrische Leiter (11a, 11b) mit dem Schlauch (7a, 7b) der Fluidleitung verbunden ist.

3. Elektrizitätsübertragungsvorrichtung, die eine Unterwasserstruktur (2) und eine Unterwasserflugleitung (6) nach Anspruch 1 oder Anspruch 2 umfasst, wobei die Unterwasserstruktur (2) eine Fluidleitung und eine feste Platte (3) umfasst, wobei die Fluidleitung in einem Fluidkoppler (4a, 4b) an der festen Platte (3) endet, wobei der Fluidkoppler (4a, 4b) der festen Platte im Gebrauch mit dem Flugplattenfluidkoppler (10a, 10b) gekoppelt ist.

4. Elektrizitätsübertragungsvorrichtung nach Anspruch 3, wobei die Unterwasserstruktur (2) einen elektrischen Verbinder (5a, 5b) an ihrer festen Platte (3) umfasst und der elektrische Verbinder (5a, 5b) der festen Platte im Gebrauch mit dem elektrischen Verbinder (12a, 12b) der Flugplatte verbunden ist.

5. Elektrizitätsübertragungsvorrichtung nach Anspruch 3, wobei die Fluidleitung (26, 32) der Unterwasserstruktur (2) einen nichtleitenden Abschnitt (29, 35) umfasst.

6. Unterwasserflugleitung (6) nach Anspruch 1 oder 2 oder Elektrizitätsübertragungsvorrichtung nach einem der Ansprüche 3 bis 5, wobei die Fluidleitung der Unterwasserflugleitung (6) eine Hydraulikleitung ist.

7. Unterwasserflugleitung (6) nach Anspruch 1 oder 2 oder Elektrizitätsübertragungsvorrichtung nach einem der Ansprüche 3 bis 5, wobei die Fluidleitung der Unterwasserflugleitung (6) eine chemische Leitung ist.

8. Verfahren zum Übertragen eines elektrischen Stroms an eine Komponente einer Unterwasser-Kohlenwasserstoffextraktionsanlage, wobei das Verfahren die folgenden Schritte umfasst:
Bereitstellen einer Unterwasserflugleitung (6), die mindestens eine Fluidleitung enthält, die einen Schlauch (7a, 7b) umfasst, wobei der Schlauch in einem Fluidkoppler (10a, 10b) in einer Flugplatte (9) endet;
Bereitstellen einer Unterwasserstruktur (2), die mindestens eine Fluidleitung enthält, die einen Schlauch umfasst, wobei der Schlauch in einem Fluidkoppler (4a, 4b) in einer festen Platte (3) endet;
Verbinden der Flugplatte (9) mit der festen Platte (3), so dass der Flugplattenfluidkoppler (10a, 10b) mit dem Fluidkoppler (4a, 4b) der festen Platte gekoppelt wird;
**gekennzeichnet durch** Übertragen eines elektrischen Stroms entlang des Schlauchs (7a, 7b); und
Übertragen des elektrischen Stroms von dem Schlauch (7a, 7b) einer der Fluidleitungen über einen elektrischen Leiter (11a, 11b) an die Komponente.

9. Verfahren nach Anspruch 8, wobei der elektrische Leiter (11a, 11b) mit der Fluidleitung der Unterwasserflugleitung (6) verbunden wird.

10. Verfahren nach Anspruch 9, wobei die Unterwasserflugleitung (6) einen elektrischen Verbinder (12a, 12b) in ihrer Flugplatte (9) umfasst, und wobei der elektrische Leiter (11a, 11b) von dem Schlauch (7a, 7b) der Fluidleitung zu dem elektrischen Verbinder (12a, 12b) verläuft.

11. Verfahren nach Anspruch 10, wobei die Unterwasserstruktur (2) einen elektrischen Verbinder (5a, 5b) an ihrer festen Platte (3) umfasst und der elektrische Verbinder (5a, 5b) der festen Platte im Gebrauch mit dem elektrischen Verbinder (12a, 12b) der Flugplatte verbunden ist.

12. Verfahren nach Anspruch 8, wobei die Fluidleitung (26, 32) der Unterwasserstruktur (2) einen nichtleitenden Abschnitt (26, 32) umfasst.

13. Verfahren nach Anspruch 12, wobei der elektrische Leiter mit der Fluidleitung der Unterwasserstruktur (2) an einem Punkt zwischen dem nichtleitenden Abschnitt (29, 35) und dem Fluidkoppler der festen Platte (3) verbunden wird.

14. Verfahren nach Anspruch 13, wobei der elektrische Leiter mit einer elektrisch betriebenen Komponente der Unterwasserstruktur (2) verbunden wird.

## Revendications

1. Câble volant sous-marin (6) pour la transmission d'un courant électrique à un composant d'une structure sous-marine, le câble volant sous-marin (6) comprenant :
une conduite de fluide comprenant un tubage (7a,7b), **caractérisé en ce que,** lors de l'utilisation, un courant électrique est transmis le long du tubage (7a,7b) ;
une plaque volante (9), dans lequel la conduite de fluide se termine par un coupleur de fluide (10a, 10b) sur la plaque volante (9) ; et
un connecteur électrique (!2a, 12b) dans la plaque volante (9), et dans lequel un conducteur électrique (11a, 11b) s'étend du tubage (7a,7b) de conduite de fluide au connecteur électrique (12a, 12b) ;
dans lequel la plaque volante (9) est agencée pour être reliée à une plaque fixe (3) sur une structure sous-marine (2) contenant au moins une conduite de fluide comprenant un tubage se terminant dans un coupleur de fluide (4a, 4b) dans la plaque fixe (3) de telle sorte que, lors de l'utilisation, le coupleur de fluide à plaque volante (10a, 10b) est couplé au coupleur de fluide à plaque fixe (4a, 4b) ; et
le courant électrique transmis le long du tubage (7a,7b) de la conduite de fluide est, lors de l'utilisation, transmis par l'intermédiaire du conducteur électrique (11a, 11b) à un composant de la structure sous-marine (2).

2. Câble volant sous-marin (6) selon la revendication 1, dans lequel la conduite de fluide comprend une section non conductrice (13a, 13b) entre le coupleur de fluide à plaque volante (10a, 10b) et le point où le conducteur électrique (11a, 11b) est relié au tubage (7a,7b) de la conduite de fluide.

3. Appareil de transmission d'électricité comprenant une structure sous-marine (2) et un câble volant sous-marin (6) selon la revendication 1 ou la revendication 2, dans lequel la structure sous-marine (2) comprend une conduite de fluide et une plaque fixe (3), ladite conduite de fluide se terminant dans un coupleur de fluide (4a,4b) sur la plaque fixe (3), dans lequel, lors de l'utilisation, le coupleur de fluide à plaque fixe (4a,4b) est couplé audit coupleur de fluide à plaque volante (10a, 10b).

4. Appareil de transmission d'électricité selon la revendication 3, dans lequel la structure sous-marine (2) comprend un connecteur électrique (5a,5b) sur sa plaque fixe (3) et, lors de l'utilisation, le connecteur électrique à plaque fixe (5a,5b) est relié audit connecteur électrique à plaque volante (12a, 12b).

5. Appareil de transmission d'électricité selon la revendication 3, dans lequel la conduite de fluide (26,32) de la structure sous-marine (2) comprend une section non conductrice (29,35).

6. Câble volant sous-marin (6) selon la revendication 1 ou 2, ou un appareil de transmission d'électricité selon l'une quelconque des revendications 3 à 5, dans lequel la conduite de fluide du câble volant sous-marin (6) est une conduite hydraulique.

7. Câble volant sous-marin (6) selon la revendication 1 ou 2, ou appareil de transmission d'électricité selon l'une quelconque des revendications 3 à 5, dans lequel la conduite de fluide du câble volant sous-marin (6) est une conduite chimique.

8. Procédé de transmission d'un courant électrique à un composant d'une installation d'extraction d'hydrocarbures sous-marine, le procédé comprenant les étapes consistant à :
la fourniture d'un câble volant sous-marin (6) contenant au moins une conduite de fluide comprenant un tubage (7a,7b), ledit tubage se terminant dans un coupleur de fluide (10a, 10b) dans une plaque volante (9) ;
la fourniture d'une structure sous-marine (2) contenant au moins une conduite de fluide comprenant un tubage, ledit tubage se terminant dans un coupleur de fluide (4a,4b) dans une plaque fixe (3) ;
la liaison de la plaque volante (9) à la plaque fixe (3), de telle sorte que le coupleur de fluide à plaque volante (10a, 10b) est couplé au coupleur de fluide à plaque fixe (4a,4b) ;
**caractérisé par** la transmission d'un courant électrique le long du tubage (7a,7b) ; et
la transmission, par l'intermédiaire d'un conducteur électrique (11a, 11b), du courant électrique du tubage (7a,7b) de l'une des conduites de fluide au composant.

9. Procédé selon la revendication 8, dans lequel le conducteur électrique (11a, 11b) est relié à la conduite de fluide du câble volant sous-marin (6).

10. Procédé selon la revendication 9, dans lequel le câble volant sous-marin (6) comprend un connecteur électrique (12a, 12b) dans sa plaque volante (9), et dans lequel le conducteur électrique (11a, 11b) s'étend du tubage (7a,7b) de conduite de fluide au connecteur électrique (12a,12b).

11. Procédé selon la revendication 10, dans lequel la structure sous-marine (2) comprend un connecteur électrique (5a,5b) sur sa plaque fixe (3) et, lors de l'utilisation, le connecteur électrique à plaque fixe (5a,5b) est relié audit connecteur électrique à plaque volante (12a, 12b).

12. Procédé selon la revendication 8, dans lequel la conduite de fluide (26,32) de la structure sous-marine (2) comprend une section non conductrice (26,32).

13. Procédé selon la revendication 12, dans lequel le conducteur électrique est relié à la conduite de fluide de la structure sous-marine (2) au niveau d'un point situé entre la section non conductrice (29,35) et le coupleur de fluide de la plaque fixe (3).

14. Procédé selon la revendication 13, dans lequel le conducteur électrique est relié à un composant alimenté électriquement de la structure sous-marine (2).
